(19) Europäisches Patentamt / European Patent Office / Office européen des brevets

(11) EP 4 748 885 A1

(12) EUROPEAN PATENT APPLICATION

(43) Date of publication:
**27.05.2026 Bulletin 2026/22**

(21) Application number: **24214408.7**

(22) Date of filing: **21.11.2024**

(51) International Patent Classification (IPC):
***C08L 27/18*** *(2006.01)* ***C08L 69/00*** *(2006.01)*

(52) Cooperative Patent Classification (CPC):
(C-Sets available)
**C08L 69/00; C08L 27/18;** C08G 64/186;
C08L 2205/025; C08L 2205/035 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **WANG, Qin**
  **Shanghai (CN)**
- **YANG, Jian**
  **Shanghai (CN)**
- **GUO, Mingcheng**
  **Shanghai (CN)**

(74) Representative: **Modiano, Gabriella Diana et al**
**Modiano & Partners SA**
**Steinsdorfstraße 14**
**80538 München (DE)**

# (54) POLYCARBONATE COMPOSITIONS HAVING IMPROVED TRANSMITTANCE AND DUCTILITY PROPERTIES

(57) Thermoplastic compositions include: a. from about 10 wt% to about 85 wt% of a polycarbonate component; b. from about 1 wt% to about 50 wt% of a polyester component; and c. from about 5 wt% to about 40 wt% of a polycarbonate-siloxane copolymer having a siloxane content of from 25 wt% to 60 wt%. The polycarbonate component in a. is different from the polycarbonate-siloxane copolymer in c. The composition comprises less than 1.0 wt% of a styrene-acrylonitrile encapsulated polytetrafluoroethylene (TSAN). The combined weight percent value of all components does not exceed 100 wt%, and all weight percent values are based on the total weight of the composition.

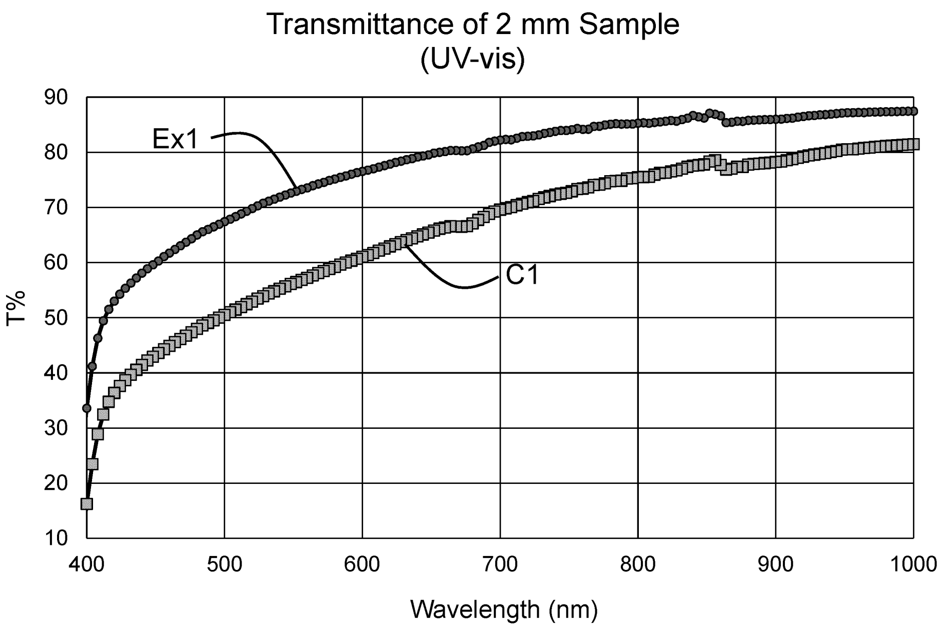


FIG. 1

(52) Cooperative Patent Classification (CPC): (Cont.)

C-Sets
**C08L 69/00, C08L 69/00, C08L 67/02, C08L 83/10, C08K 5/523;**
**C08L 69/00, C08L 69/00, C08L 67/02, C08L 83/10, C08K 5/5399**

## Description

### FIELD OF THE DISCLOSURE

The present disclosure relates to polycarbonate compositions, and in particular to compositions including polycarbonate and polyester blends that include a polycarbonate-siloxane copolymer. The compositions have improved transmittance and ductility properties.

### BACKGROUND OF THE DISCLOSURE

Transmittance is one of the special properties of plastics, and high transmittance is very important for certain applications such as transmission welding applications. Typically, neat polymer resins have very high transmittance properties. However, it can be challenging to achieve high transmittance in resin blends that include additives, because different resins may have different intrinsic refractive indices, resulting in phase separation. Depending on the application requirement, resin blends and additional additives must be included to balance physical properties of the thermoplastic composition, such as ductility, flame retardance, and chemical resistance.

Polycarbonate and polyester blends are popular plastics in certain applications such as consumer electronics because of their balanced impact, chemical resistance, and melt flow properties. Polycarbonate-siloxane copolymers have been developed to enhance chemical resistance and ductility properties. Flame retardant additives provide improved flame resistance which may be necessary in some applications. Complex blends including these and other components can have an adverse effect on basic properties such as transmittance. It can be a technical challenge to develop thermoplastic compositions that balance all of these desired properties.

These and other shortcomings are addressed by aspects of the present disclosure.

### SUMMARY

Aspects of the disclosure relate to thermoplastic compositions including: a. from about 10 wt% to about 85 wt% of a polycarbonate component; b. from about 1 wt% to about 50 wt% of a polyester component; and c. from about 5 wt% to about 40 wt% of a polycarbonate-siloxane copolymer having a siloxane content of from 25 wt% to 60 wt%. The polycarbonate component in a. is different from the polycarbonate-siloxane copolymer in c. The composition comprises less than 1.0 wt% of a styrene-acrylonitrile encapsulated polytetrafluoroethylene (TSAN). The combined weight percent value of all components does not exceed 100 wt%, and all weight percent values are based on the total weight of the composition.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIG. 1 is a graph showing transmittance of a 2 mm thick sample as a function of frequency for example and comparative compositions according to aspects of the disclosure.

FIG. 2 is a graph showing transmittance of a 3.2 mm thick sample as a function of frequency for example and comparative compositions according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or

descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the

formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

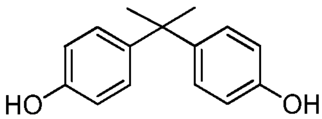

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

As used herein, "polybutylene terephthalate" can be used interchangeably with poly(1,4-butylene terephthalate). Polybutylene terephthalate is one type of polyester. Polyesters, which include poly(alkylene dicarboxylates), liquid crystalline polyesters, and polyester copolymers, can be useful in the disclosed thermoplastic compositions of the present disclosure.

As used herein, "polyethylene terephthalate" can be used interchangeably with poly(ethyl benzene-1,4-dicarboxylate). As with polybutylene terephthalate, polyethylene terephthalate is a type of polyester.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the

sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure relate to thermoplastic compositions including: a. from about 10 wt% to about 85 wt% of a polycarbonate component; b. from about 1 wt% to about 50 wt% of a polyester component; and c. from about 5 wt% to about 40 wt% of a polycarbonate-siloxane copolymer having a siloxane content of from 25 wt% to 60 wt%. The polycarbonate component in a. is different from the polycarbonate-siloxane copolymer in c. The composition includes less than 1.0 wt% of a styrene-acrylonitrile encapsulated polytetrafluoroethylene (TSAN). The combined weight percent value of all components does not exceed 100 wt%, and all weight percent values are based on the total weight of the composition.

In some aspects the polycarbonate component includes a polycarbonate homopolymer. The polycarbonate may include a post-consumer recycled polycarbonate (PCR-PC) in certain aspects.

The composition includes from about 10 wt% to about 85 wt% of the polycarbonate component. In particular aspects the composition includes at least 10 wt%, or at least 15 wt%, or at least 20 wt%, or at least 30 wt%, or at least 35 wt%, or at least 40 wt%, or at least 45 wt%, or at least 50 wt%, or at least 55 wt%, or at least 60 wt%, or at least 65 wt%, or at most 85 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, or at most 35 wt%, of the polycarbonate component.

The polyester component may include, but is not limited to, poly(alkylene dicarboxylates), liquid crystalline polyesters, and polyester copolymers. In certain aspects the polyester component includes polybutylene terephthalate (PBT), polyetherimide (PEI), and combinations thereof. In a specific aspect the polyester component includes PBT.

The thermoplastic composition includes from about 20 wt% to about 40 wt% of the polyester component. In further aspects the composition includes at least 20 wt%, or at least 25 wt%, or at least 30 wt%, or at least 35 wt%, or at most 40 wt%, or at most 35 wt%, or at most 30 wt%, or at most 25 wt%, of the polyester component.

In some aspects the polycarbonate copolymer component includes a polycarbonate-siloxane copolymer having a siloxane content of from 25 wt% to 60 wt%, based on the total weight of the polycarbonate-siloxane copolymer component. In further aspects the polycarbonate-siloxane copolymer has a siloxane content of at least 25 wt%, or at least 30 wt%, or at least 35 wt%, or at least 38 wt%, or 40 wt%, or at most 60 wt%, or at most 55 wt%, or at most 50 wt%, or at most 45 wt%, or at most 42 wt%. In particular aspects the polycarbonate copolymer component includes a polycarbonate-siloxane copolymer having a siloxane content of from 35 wt% to 45 wt%, or from 38 wt% to 42 wt%. Suitable polycarbonate-siloxane copolymers are available from SABIC.

The composition includes from about 5 wt% to about 40 wt% of the polycarbonate-siloxane copolymer. In specific aspects the composition includes at least 5 wt%, or at least 10 wt%, or at least 15 wt%, or at least 20 wt%, or at least 25 wt%, or at least 30 wt%, or at most 40 wt%, or at most 35 wt%, or at most 30 wt%, or at most 25 wt%, or at most 20 wt%, or at most 15 wt%, or from about 10 wt% to about 15 wt%, of the polycarbonate-siloxane copolymer.

In certain aspects the composition includes less than 1 wt% of a polycarbonate copolymer including 2-Phenyl-3,3-bis(4-hydroxyphenyl)phthalimidine (PPPBP). The term "PPPBP" as used herein refers to a compound having a structure represented by the formula:

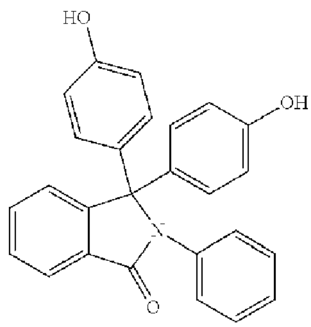

PPPBP can also be referred to by the following names: 2-Phenyl-3,3-bis(4-hydroxyphenyl)phthalimidine; N-Phenyl-3,3-bis(4-hydroxyphenyl)phthalimidine; 3,3-bis(4-hydroxyphenyl)-2-phenylisoindolin-1-one; 3,3-bis(4-hydroxyphenyl)-2-phenyl-2,3-dihydro-1H-isoindol-1-one. PPPBP has the CAS #6607-41-6.

The composition includes less than 1.0 wt% of a styrene-acrylonitrile encapsulated polytetrafluoroethylene (TSAN). In further aspects the composition includes less than 0.9 wt% TSAN, or less than 0.8 wt% TSAN, or less than 0.7 wt% TSAN, or less than 0.6 wt% TSAN, or less than 0.5 wt% TSAN, or less than 0.4 wt% TSAN, or less than 0.3 wt% TSAN, or less than 0.2 wt% TSAN, or less than 0.1 wt% TSAN. Compositions including more than this content of TSAN may not have high transmittance properties desired in certain aspects of the disclosure.

In some aspects the composition further includes from greater than 0 wt% to about 20 wt% of a flame retardant (FR) component. Exemplary FR components include phosphorous components, including but not limited to bisphenol A bis(diphenyl phosphate) (BPADP), phenoxyphosphazene (PPZ), or a combination thereof.

PPZ has the following chemical structure:

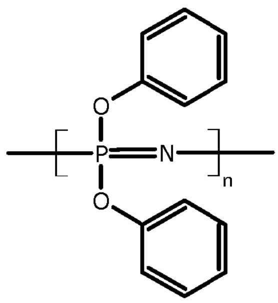

BPADP has the following chemical structure:

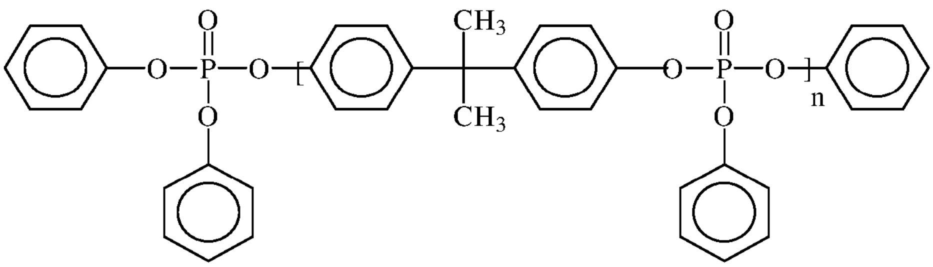

In particular aspects the composition includes at least 0.1 wt%, or at least 0.5 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 20 wt%, or at most 19 wt%, or at most 18 wt%, or at most 17 wt%, or at most 16 wt%, or at most 15 wt%, or at most 14 wt%, or at most 13 wt%, or at most 12 wt%, or at most 11 wt%, or at most 10 wt%, or at most 9 wt%, of the flame retardant component.

In certain aspects the composition includes at least one additional additive. The at least one additional additive may include, but is not limited to, an acid scavenger, an anti-drip agent, an antioxidant, a stabilizer, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.

In some aspects the composition includes from 0.1 wt% to 2 wt% of the at least one additional additive. In further aspects the composition includes at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at least 1.1 wt%, or at most 1.2 wt%, or at most 2 wt%, or at most 1.9 wt%, or at most 1.8 wt%, or at most 1.7 wt%, or at most 1.6 wt%, or at most 1.5 wt%, or at most 1.4 wt%, or at most 1.3 wt%, or at most 1.2 wt%, or at most 1.1 wt%, or at most 1 wt%, or at most 0.9 wt%, or at most 0.8 wt%, or at most 0.7 wt%, or at most 0.6 wt%, or at most 0.5 wt%, of the at least one additional additive.

In specific aspects the composition includes less than 1 wt% of a filler, reinforcing agent, or combination thereof. Fillers include, but are not limited to: clay; $TiO_2$; fibers including asbestos or the like fibers; silicates and silica powders, aluminum silicate (mullite), synthetic calcium silicate, zirconium silicate, fused silica, crystalline silica graphite, natural silica sand, or the like; boron powders, boron-nitride powder, boron-silicate powders, or the like; alumina; magnesium oxide (magnesia); calcium sulfate (as its anhydride, dihydrate or trihydrate); calcium carbonates, chalk, limestone, marble, synthetic precipitated calcium carbonates, or the like; talc, including but not limited to fibrous, modular, needle shaped, lamellar talc, or the like; wollastonite; surface-treated wollastonite; glass spheres including but not limited to hollow and solid glass spheres, silicate spheres, cenospheres, aluminosilicate (armospheres),or the like; kaolin, including but not

limited to hard kaolin, soft kaolin, calcined kaolin, kaolin including various coatings known in the art to facilitate compatibility with the polymeric matrix resin, or the like; single crystal fibers or "whiskers" including but not limited to silicon carbide, alumina, boron carbide, iron, nickel, copper, or the like; glass fibers, (including continuous and chopped fibers), including but not limited to E, A, C, ECR, R, S, D, and NE glasses and quartz, or the like; sulfides including but not limited to molybdenum sulfide, zinc sulfide or the like; barium compounds including but not limited to barium titanate, barium ferrite, barium sulfate, heavy spar, or the like; metals and metal oxides including but not limited to particulate or fibrous aluminum, bronze, zinc, copper and nickel or the like; flaked fillers including but not limited to as glass flakes, flaked silicon carbide, aluminum diboride, aluminum flakes, steel flakes or the like; fibrous fillers, for example short inorganic fibers including but not limited to those derived from blends including at least one of aluminum silicates, aluminum oxides, magnesium oxides, and calcium sulfate hemihydrate or the like; natural fillers and reinforcements, including but not limited to wood flour obtained by pulverizing wood, fibrous products such as cellulose, cotton, sisal, jute, starch, cork flour, lignin, ground nut shells, corn, rice grain husks or the like; reinforcing organic fibrous fillers formed from organic polymers capable of forming fibers including but not limited to poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents including but not limited to mica, clay, feldspar, flue dust, fillite, quartz, quartzite, perlite, tripoli, diatomaceous earth, carbon black, or the like, or combinations including at least one of the foregoing fillers or reinforcing agents.

In some aspects compositions according to aspects of the disclosure have improved transmittance as compared to a reference composition having the same total siloxane content but that includes a polycarbonate-siloxane copolymer having a siloxane content of less than 25 wt% instead of the polycarbonate-siloxane copolymer having a siloxane content of from 25 wt% to 60 wt%. Transmittance may be evaluated according to a UV-vis method or according to ASTM D1003. Improved transmittance may include an improvement of at least 5%, or at least 10%, or at least 15%, or at least 20%, or at least 25%, or at least 30%, or at least 35%, or at least 40%, or at least 45%, or at least 50%.

In further aspects the composition has reduced haze as compared to a reference composition having the same total siloxane content but that includes a polycarbonate-siloxane copolymer having a siloxane content of less than 25 wt% instead of the polycarbonate-siloxane copolymer having a siloxane content of from 25 wt% to 60 wt%. Haze is evaluated according to ASTM D1003. In certain aspects reduced haze includes a reduction in haze of at least 10%, or at least 20%, or at least 30%, or at least 40%, or at least 50%, or at least 60%.

In some aspects the composition includes a deep black color characterized by an L* color value of less than 31 as evaluated according to a CIELab color space using a sample thickness of 2.5 millimeters (mm). In other aspects the composition has an L* color value of less than 30, or less than 29, or less than 28, as evaluated according to a CIELab color space using a sample thickness of 2.5 mm.

In particular aspects the composition has improved chemical resistance as compared to a reference composition having the same total siloxane content that includes a polycarbonate-siloxane copolymer having a siloxane content of less than 25 wt% as compared to the polycarbonate-siloxane copolymer having a siloxane content of from 25 wt% to 60 wt%. Chemical resistance may be evaluated by a visual analysis of samples after exposure to the indicated chemical for 2 or 7 days under a strain of 0.5% or 1.0% in accordance with ASTM D543. The samples may be visually observed for failure after an indicated time period. Failure is indicated by crazing (stress cracking) on the surface of the sample. Accordingly, in some aspects the composition has improved chemical resistance as compared to a reference composition having the same total siloxane content that includes a polycarbonate-siloxane copolymer having a siloxane content of less than 25 wt% as compared to the polycarbonate-siloxane copolymer having a siloxane content of from 25 wt% to 60 wt%, wherein improved chemical resistance means that the composition exhibits a lower percentage of crazing on its surface than the comparative composition. In specific aspect the composition has 10% less crazing, or 20% less crazing, or 30% less crazing, or 40% less crazing, or 50% less crazing, or 60% less crazing, or 70% less crazing, or 80% less crazing, or 90% less crazing, or 100% less crazing.

In further aspects a 3.2 mm thick sample of the composition has a notched Izod impact (NII) strength of at least 440 Joules per meter (J/m) and a ductility of 100% at a temperature of 23 °C as evaluated according to ASTM D256. In specific aspects the composition has a NII strength of at least 460 J/m, or at least 480 J/m, or at least 500 J/m, or at least 520 J/m, or at least 540 J/m, or at least 560 J/m, or at least 580 J/m, or at least 600 J/m, or at least 620 J/m, or at least 640 J/m, or at least 660 J/m, or at least 680 J/m, or at least 700 J/m, or at least 720 J/m, or at least 740 J/m, or at least 760 J/m, or at least 780 J/m, or at least 800 J/m, or at least 820 J/m, or at least 840 J/m, or at least 860 J/m, or at least 880 J/m, or at most 1000 J/m.

In particular aspects a 3.2 mm thick sample of the composition has a NII strength of at least 80 J/m, or at least 150 J/m, or at least 200 J/m, or at least 250 J/m, or at least 300 J/m, or at least 350 J/m, or at least 400 J/m, or at least 450 J/m, or at least 500 J/m, or at least 550 J/m, or at least 600 J/m, or at most 1000 J/m, at a temperature of 0 °C as evaluated according to ASTM D256.

In further aspects a 3.2 mm thick sample of the composition has a NII strength of at least 400 J/m, or at least 450 J/m, or at least 500 J/m, or at least 550 J/m, or at least 600 J/m, or at least 650 J/m, or at least 700 J/m, or at least 750 J/m, or

at most 1000 J/m, at a temperature of -10 °C as evaluated according to ASTM D256.

In certain aspects a 3.2 mm thick sample of the composition has a NII strength of at least 150 J/m, or at least 200 J/m, or at least 250 J/m, or at least 300 J/m, or at least 350 J/m, or at least 400 J/m, or at least 450 J/m, or at least 500 J/m, or at least 550 J/m, or at least 600 J/m, or at least 650 J/m, or at most 1000 J/m, at a temperature of -20 °C as evaluated according to ASTM D256.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Articles **of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In specific aspects the article is a component of a consumer electronics application. In particular aspects the article is suitable for use in laser welding applications.

Various combinations of elements of this disclosure are encompassed by this disclosure, e.g., combinations of elements from dependent claims that depend upon the same independent claim.

Aspects **of the** Disclosure

In various aspects, the present disclosure pertains to and includes at least the following aspects.

Aspect 1. A thermoplastic composition comprising:

a. from about 10 wt% to about 85 wt% of a polycarbonate component;
b. from about 1 wt% to about 50 wt% of a polyester component; and
c. from about 5 wt% to about 40 wt% of a polycarbonate-siloxane copolymer having a siloxane content of from 25 wt% to 60 wt%,

wherein

the polycarbonate component in a. is different from the polycarbonate-siloxane copolymer in c.,
the composition comprises less than 1.0 wt% of a styrene-acrylonitrile encapsulated polytetrafluoroethylene (TSAN), and
the combined weight percent value of all components does not exceed 100 wt%, and all weight percent values are based on the total weight of the composition.

Aspect 2. The thermoplastic composition according to Aspect 1, wherein the polycarbonate component comprises a polycarbonate homopolymer.
Aspect 3. The thermoplastic composition according to Aspect 1 or 2, wherein the polycarbonate component comprises a post-consumer recycled polycarbonate.
Aspect 4. The thermoplastic composition according to any one of Aspects 1 to 3, wherein the polyester component is a polybutylene terephthalate.
Aspect 5. The thermoplastic composition according to any one of Aspects 1 to 4, wherein the polycarbonate-siloxane copolymer has a siloxane content of from 35 wt% to 45 wt%.
Aspect 6. The thermoplastic composition according to any one of Aspects 1 to 5, wherein the composition comprises from about 10 wt% to about 15 wt% of the polycarbonate-siloxane copolymer.
Aspect 7. The thermoplastic composition according to any one of Aspects 1 to 6, wherein the composition comprises less than 1 wt% of a polycarbonate copolymer comprising 2-Phenyl-3,3-bis(4-hydroxyphenyl)phthalimidine (PPPBP).
Aspect 8. The thermoplastic composition according to any one of Aspects 1 to 7, wherein the composition further comprises from greater than 0 wt% to about 20 wt% of a flame retardant component.
Aspect 9. The thermoplastic composition according to Aspect 8, wherein the flame retardant component comprises bisphenol A bis(diphenyl phosphate) (BPADP), phenoxyphosphazene (PPZ), or a combination thereof.
Aspect 10. The thermoplastic composition according to any one of Aspects 1 to 9, wherein the composition further comprises at least one additional additive.
Aspect 11. The thermoplastic composition according to Aspect 10, wherein the at least one additional additive comprises an acid scavenger, an anti-drip agent, an antioxidant, a stabilizer, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.
Aspect 12. The thermoplastic composition according to any one of Aspects 1 to 11, wherein the composition comprises less than 1 wt% of a filler.
Aspect 13. The thermoplastic composition according to any one of Aspects 1 to 12,

wherein the composition has an improved transmittance as compared to a reference composition having the same total siloxane content but that includes a polycarbonate-siloxane copolymer having a siloxane content of less than 25 wt% instead of the polycarbonate-siloxane copolymer having a siloxane content of from 25 wt% to 60 wt%, and
wherein transmittance is evaluated according to a UV-vis method or according to ASTM D1003.

Aspect 14. The thermoplastic composition according to any one of Aspects 1 to 13, wherein the composition comprises a deep black color characterized by an L* color value of less than 28 as evaluated according to a CIELab color space using a sample thickness of 2.5 millimeters (mm).
Aspect 15. The thermoplastic composition according to any one of Aspects 1 to 14, wherein the composition has improved chemical resistance as compared to a reference composition having the same total siloxane content that includes a polycarbonate-siloxane copolymer having a siloxane content of less than 25 wt% as compared to the polycarbonate-siloxane copolymer having a siloxane content of from 25 wt% to 60 wt%.
Aspect 16. The thermoplastic composition according to any one of Aspects 1 to 15, wherein a 3.2 mm thick sample of the composition has a notched Izod impact strength of at least 440 Joules per meter (J/m) and a ductility of 100% at a temperature of 23 °C as evaluated according to ASTM D256.
Aspect 17. An article comprising the thermoplastic composition according to any one of Aspects 1 to 16.
Aspect 18. The article according to Aspect 17, wherein the article is a component of a consumer electronics application.

## EXAMPLES

The following examples are put forth so as to provide those of ordinary skill in the art with a complete disclosure and description of how the compounds, compositions, articles, devices and/or methods claimed herein are made and

evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions prepared and discussed herein included one or more of the components listed in Table 1:

**Table 1 - Components**

| Component | Description | Source |
|---|---|---|
| PC1 | Polycarbonate homopolymer, 100 GRADE | SABIC |
| PC2 | Polycarbonate homopolymer, PCP1300 | SABIC |
| PCR-PC | Post-consumer recycled (PCR) polycarbonate homopolymer, Grade 116A | Hongyu |
| PC-Si-1 | Polycarbonate-siloxane (PC-Si) copolymer, 20 wt% siloxane, PCP endcapped | SABIC |
| PC-Si-2 | PC-Si Copolymer, 40 wt% siloxane, PCP endcapped | SABIC |
| PBT | Polybutylene terephthalate, Valox™ 315 | SABIC |
| AO1010 | Antioxidant 1010, stabilizer | BASF |
| BPADP | Bisphenol A bis(diphenyl phosphate), flame retardant | Daihachi |
| PPZ | Polyphosphazene, flame retardant | Fushimi |
| MZP | Mono zinc phosphate, stabilizer | Budenheim |
| UV | Benzotriazole, UV additive | BASF |
| TSAN | Styrene-acrylonitrile (SAN) encapsulated polytetrafluoroethylene (PTFE), anti-drip agent | SABIC |
| C1 | Colorant 1, yellow SY179, | LANXESS |
| C2 | Colorant 2, red SR135 | LANXESS |
| C3 | Colorant 3, green SG3 | FARBTEX |

Pellets were compounded from the compositions on an STC-S lab line (Toshiba TEM-37BS). The FR additive BPADP was fed separately before Zone 3; the remaining resin and additives were pre-mixed and fed from the main throat using another feeder. Samples were injection molded from the pellets using the conditions set forth in Table 2:

**Table 2 - Molding Conditions**

| Molding parameters | Unit | Value |
|---|---|---|
| Pre-drying time | Hour | 4 |
| Pre-drying temp | °C | 90 |
| Hopper temp | °C | 70 |
| Zone 1 temp | °C | 220 |
| Zone 2 temp | °C | 230 |
| Zone 3 temp | °C | 245 |
| Nozzle temp | °C | 245 |
| Mold temp | °C | 80 |

Tensile properties were evaluated according to ASTM D638 method using a test speed of 50 millimeters per minute (mm/min); tensile modulus at stress are reported in megapascals (MPa) and tensile elongation is reported as a percentage (%). Impact properties (notched Izod impact strength, NII) was performed at the indicated temperature

according to ASTM D256 with a pendulum energy of 5 pound-force per feet (lbf/ft); impact strength is reported in Joules per meter (J/m), ductility is reported in %. Flexural properties were evaluated in accordance with ASTM 790, using a test speed of 1.27 mm/min and a part thickness of 3.2 mm; flexural modulus and strength are reported in MPa. Melt Flow Rate (MFR) was evaluated using granulate samples dried for 4 hours at 90 °C, in accordance with ASTM D1238. Heat deflection temperature in °C was evaluated according to ASTM D648 under a stress of 1.82 MPa and a part thickness of 3.2 mm. Flame retardancy Vx was tested according to UL94. Color properties were evaluated on a CIELab color scale using a 2.5 mm thick sample using a transmission (T) or reflection (Ref) model.

Transmittance was evaluated at the indicated wavenumbers on a sample having the indicated thickness using a reflector model on a UV/VIS/NIR spectrometer ("UV-vis" method); results are reported in % transmittance. Transmittance and haze were further evaluated at the indicated thicknesses using a Haze-gard transmission meter according to ASTM D1003; results are reported in %.

Chemical resistance was evaluated by a visual analysis of samples after exposure to the indicated chemical for 2 or 7 days under a strain of 0.5% or 1.0% in accordance with ASTM D543. The samples may be visually observed for failure after an indicated time period. Failure is indicated by crazing (stress cracking) on the surface of the sample. Accordingly, in some aspects the composition has improved chemical resistance as compared to a reference composition having the same total siloxane content that includes a polycarbonate-siloxane copolymer having a siloxane content of less than 25 wt% as compared to the polycarbonate-siloxane copolymer having a siloxane content of from 25 wt% to 60 wt%, wherein improved chemical resistance means that the composition exhibits a lower percentage of crazing on its surface than the comparative composition.

Comparative and example compositions including a phosphazene (PPZ) flame retardant were prepared as shown in Table 3A; properties of the compositions were evaluated and are shown in Table 3B:

**Table 3A - Comparative and Example Compositions**

| **Component** | **C1** | **Ex1** |
|---|---|---|
| PBT | 20 | 20 |
| PCR-PC | 30 | 30 |
| PC1 | 18.53 | 28.53 |
| PC2 | | |
| PC-Si-1 | 20 | |
| PC-Si-2 | | 10 |
| PPZ | 11 | 11 |
| AO1010 | 0.15 | 0.15 |
| MZP | 0.05 | 0.05 |
| UV | 0.27 | 0.27 |
| **Total (wt%)** | 100 | 100 |
| Total siloxane content (wt%) | 4 | 4 |

**Table 3B - Properties of Table 3A Compositions**

| **Property** | **Unit** | **C1** | **Ex1** |
|---|---|---|---|
| Chemical resistance | Failure ratio (crazing) | | |
| Artificial sweat (pH 6.5), 1% strain, 7 days | % | 0 | 0 |
| DEET, 0.5% strain, 7 days | % | 100 | 50 |
| | Average # of crazes on each bar that failed (i.e., had crazing) | > 20 | ~2 |
| MFR, 250 °C, 5 kg | g/10 min | 26.3 | 22.9 |
| MFR, 265 °C, 5 kg | g/10 min | 29.2 | 25.5 |
| Tensile modulus | MPa | 2538 | 2525 |
| Tensile stress @ yield | MPa | 59 | 57 |

(continued)

| Property | Unit | C1 | Ex1 |
|---|---|---|---|
| Tensile stress @ break | MPa | 39 | 43 |
| Tensile elongation @ yield | % | 4.3 | 4.2 |
| Tensile elongation @ break | % | 22 | 72 |
| NII, 23 °C | J/m | 711 | 767 |
| | Ductility (%) | 100 | 100 |
| NII, 0 °C | J/m | 115 | 618 |
| | Ductility (%) | 0 | 100 |
| Transmittance @ 3.2 mm thickness (UV-vis) | | | |
| Transmittance (T) % @ 800 nm | % | 39 | 45 |
| T% @ 1100 nm | % | 50 | 58 |
| T% @ 1550 nm | % | 65 | 71 |
| Transmittance @ 2 mm thickness (UV-vis) | | | |
| T% @ 800 nm | % | 75 | 85 |
| T% @ 450 nm | % | 43 | 60 |
| Color, 2.5 mm, T | | | |
| L* | | 54 | 57.5 |
| a* | | 2.4 | 2 |
| b* | | 22.2 | 22 |
| Transmittance by Haze-gard (ASTM D1003) | | | |
| T% @ 1.5 mm | % | 47 | 50 |
| T% @ 2.5 mm | % | 28 | 32 |

Comparative composition C1 included a PC-Si copolymer having a siloxane content of 20 wt%; Example composition Exlincluded a PC-Si copolymer having a siloxane content of 40 wt%. Both compositions had a total siloxane content of 4 wt%. (20 wt% of a 20 wt% siloxane copolymer in C1 and 10 wt% of a 40 wt% siloxane copolymer in Ex1). Comparing Ex1 and C1, it is observed that Ex1 had significantly higher toughness (longer tensile elongation at break and higher NII ductility at 0 °C). Ex1 also had higher transmittance at all tested thicknesses and wavelengths. This result can be visually observed in FIGS. 1 and 2, where transmittance improvements of 40% or more can be achieved.

Further comparative and example compositions including a BPADP flame retardant were prepared as shown in Table 4A; properties of the compositions were evaluated and are shown in Table 4B:

**Table 4A - Comparative and Example Compositions**

| Component | C2 | Ex2 | C3 | Ex3 | C4 | Ex4 |
|---|---|---|---|---|---|---|
| PBT | 20 | 20 | 20 | 20 | 20 | 20 |
| PC1 | 26.23 | 30.73 | 19.23 | 26.23 | 23.73 | 28.73 |
| PC2 | 23.3 | 28.8 | 16.3 | 24.3 | 21.5 | 29 |
| PC-Si-1 | 20 | | 30 | | 25 | |
| PC-Si-2 | | 10 | | 15 | | 12.5 |
| BPADP | 10 | 10 | 14 | 14 | 8.5 | 8.5 |
| TSAN | | | | | 0.8 | 0.8 |
| AO1010 | 0.15 | 0.15 | 0.15 | 0.15 | 0.15 | 0.15 |
| MZP | 0.05 | 0.05 | 0.05 | 0.05 | 0.05 | 0.05 |

(continued)

| Component | C2 | Ex2 | C3 | Ex3 | C4 | Ex4 |
|---|---|---|---|---|---|---|
| UV | 0.27 | 0.27 | 0.27 | 0.27 | 0.27 | 0.27 |
| **Total (wt%)** | 100 | 100 | 100 | 100 | 100 | 100 |
| Total siloxane content (wt%) | 4 | 4 | 6 | 6 | 5 | 5 |

**Table 4B - Properties of Table 4A Compositions**

| Property | | C2 | Ex2 | C3 | Ex3 | C4 | Ex4 |
|---|---|---|---|---|---|---|---|
| Chemical resistance DEET, 0.5% strain, 7 days | Failure ratio (crazing, %) | | | | | 100 | 0 |
| MFR, 250 °C, 5 kg | g/10 min | 30 | 32 | 35 | 39 | 21 | 24 |
| Tensile modulus | MPa | 2751 | 2734 | 2727 | 2696 | 2728 | 2665 |
| Tensile stress @ yield | MPa | 69 | 68 | 66 | 64 | 66 | 66 |
| Tensile stress @ break | MPa | 45 | 48 | 42 | 45 | 43 | 62 |
| Tensile elongation @ yield | % | 4.0 | 4.0 | 3.7 | 3.6 | 4.0 | 4.0 |
| Tensile elongation @ break | % | 44 | 75 | 30 | 85 | 47 | 118 |
| NII, 23 °C | J/m | 78 | 487 | 66 | 444 | 471 | 708 |
| | Ductility (%) | 0 | 100 | 0 | 100 | 100 | 100 |
| NII, 0 °C | J/m | 74 | 90 | 66 | 406 | 93 | 572 |
| | Ductility (%) | 0 | 0 | 0 | 100 | 0 | 100 |
| Transmittance (UV-vis) @ 3.2 mm | | | | | | | |
| T% @ 800 nm | % | 39 | 51 | 37 | 44 | 20 | 25 |
| T% @ 1100 nm | % | 50 | 68 | 53 | 63 | 26 | 33 |
| T% @ 1300 nm | % | 58 | 76 | 64 | 73 | 32 | 40 |
| T% @ 1550 nm | % | 66 | 80 | 71 | 77 | 37 | 47 |
| Color (Ref) | | | | | | | |
| L* | | 59.9 | 64.8 | 58.9 | 59.7 | 84.6 | 88 |
| a* | | 1.6 | 2.4 | 2 | 2.3 | -2.3 | -1.4 |
| b* | | 15.8 | 18.2 | 17.5 | 20.4 | 1.4 | 3.3 |
| UL 94 Vx, 1.5 mm | | | | V1 (71s) | V0 (42s) | V0 | V0 |

From these results it was observed that compositions including PC-Si-2 with 40 wt% siloxane content had significantly higher ductility as compared to comparative compositions including PC-Si-1, even with the same total siloxane content. For example, comparative composition C3 had an NII ductility of 0% at room temperature (23 °C), as compared to Ex3 which had a 100% NII ductility at room temperature and 0 °C.

Additionally, example compositions had improved color performance (higher L* and high transmittance) as compared to the comparative composition. Example composition Ex2 had higher transmittance at every wavenumber as compared to comparative composition C2. Moreover, the example compositions had improved chemical resistance. Example composition Ex4 had a 0% crazing failure ratio as compared to comparative composition C4 which had a 100% crazing failure ratio.

Further, compositions C4 and Ex4 each include 0.8 wt% TSAN. It is noted that while composition Ex4 had lower transmittance properties as compared to Ex2 and Ex3 which do not include TSAN, it still had improved transmittance properties as compared to comparative composition C4 with the same siloxane content. Thus, compositions according to aspects of the disclosure may include an anti-drip agent (e.g., TSAN) if the total amount of TSAN is minimized (e.g., less than 1 wt%).

Additional natural colored comparative and example compositions were prepared as shown in Table 5A; properties of the compositions were evaluated and are shown in Table 5B. In these compositions a flame retardant was omitted:

**Table 5A - Comparative and Example Compositions**

| | Natural color | | | | |
|---|---|---|---|---|---|
| **Component** | **C5.1** | **C5.2** | **Ex5** | **Ex6** | **Ex7** |
| PBT | 20 | 20 | 20 | 40 | 30 |
| PC1 | 40 | 25 | 30 | 20 | 25 |
| PC2 | 39.48 | 29.48 | 36.98 | 26.98 | 31.98 |
| PC-Si-1 | 0 | 25 | 0 | 0 | 0 |
| PC-Si-2 | 0 | 0 | 12.5 | 12.5 | 12.5 |
| AO1010 | 0.27 | 0.27 | 0.27 | 0.27 | 0.27 |
| MZP | 0.1 | 0.1 | 0.1 | 0.1 | 0.1 |
| UV | 0.15 | 0.15 | 0.15 | 0.15 | 0.15 |
| **Total (wt%)** | 100 | 100 | 100 | 100 | 100 |
| Total siloxane content (wt%) | 0 | 5 | 5 | 5 | 5 |

**Table 5B - Properties of Table 5A Compositions**

| **Property** | **Unit** | **C5.1** | **C5.2** | **Ex5** | **Ex6** | **Ex7** |
|---|---|---|---|---|---|---|
| Chemical resistance | Failure ratio | | | | | |
| NIVEA (SPF30), 0.5% strain, 2 days | % | | | | | |
| NIVEA (SPF30), 1% strain, 2 days | % | | 100 | 40 | 0 | 0 |
| NIVEA (SPF30), 1.5% strain, 7 days | % | | | | 0 | 0 |
| Flexural modulus (FM) | MPa | 2460 | 2270 | 2270 | 2210 | 2240 |
| Flexural strength (FS) | MPa | 100 | 90 | 90 | 85 | 87 |
| HDT, 1.82 MPa, 3.2 mm | °C | 100 | 97 | 97 | 87 | 92 |
| Tensile modulus | MPa | 2610 | 2387 | 2375 | 2328 | 2352 |
| Tensile stress @ yield | MPa | 65 | 59 | 59 | 57 | 58 |
| Tensile stress @ break | MPa | 63 | 58 | 58 | 56 | 58 |
| Tensile elongation @ yield | % | 4.8 | 4.4 | 4.4 | 4.2 | 4.3 |
| Tensile elongation @ break | % | 110 | 107 | 112 | 133 | 123 |
| NII, 23 °C | J/m | 102 | 948 | 878 | 792 | 792 |
| | Ductility (%) | 0 | 100 | 100 | 100 | 100 |
| NII, -10 °C | J/m | 90.7 | 860 | 768 | 430 | 670 |
| | Ductility (%) | 0 | 100 | 100 | 60 | 100 |
| NII, -20 °C | J/m | 87.9 | 801 | 695 | 153 | 414 |
| | Ductility (%) | 0 | 100 | 100 | 0 | 60 |
| Transmittance by Haze-gard ASTM D1003 | | | | | | |
| T% @ 1 mm | | 87.3 | 54.3 | 73.6 | 69.9 | 73.8 |
| Haze% @ 1 mm | | 9.4 | 84.5 | 29.8 | 40 | 27.8 |

Example compositions Ex5-Ex7 included PC-Si-2 having a 40 wt% siloxane content and had varying PBT content

of from 20-40 wt%. None of the compositions included a flame retardant. Comparative composition C5.1 did not include a PC-Si copolymer and composition C5.2 included PC-Si-1 having a 20 wt% siloxane content. From these results it was observed that the pure PBT/PC blend (C5.1) had 0% NII ductility, making it unsuitable for use in applications requiring good ductility. Compositions C5.2 and Ex5-Ex7 had 100% NII ductility, demonstrating that a PC-Si copolymer is a good impact modifier for PC/PBT blends. However, comparative composition C5.2 including PC-Si-1 had significantly lower transmittance and higher haze (by Haze-gard). The transmittance performance in the example compositions allow for color matching of colors such as dark black and bright white, which is highly desirable in some applications. Additionally, by increasing PBT loading (see Ex6 and Ex7 compared to Ex5), the chemical resistance can be improved while still providing a good balance of high transmittance/low haze and ductility at even very low temperatures (-10 °C and -20 °C).

Colored (deep black) comparative and example compositions were prepared as shown in Table 6A; properties of the compositions were evaluated and are shown in Table 6B. In these compositions a flame retardant was omitted:

**Table 6A - Comparative and Example Compositions**

| | **Deep black** | |
|---|---|---|
| **Component** | **C6** | **Ex8** |
| PBT | 20 | 20 |
| PC1 | 25 | 30 |
| PC2 | 28.69 | 36.19 |
| PC-Si-1 | 25 | 0 |
| PC-Si-2 | 0 | 12.5 |
| AO1010 | 0.27 | 0.27 |
| MZP | 0.1 | 0.1 |
| UV | 0.15 | 0.15 |
| C1 | 0.01 | 0.01 |
| C2 | 0.5 | 0.5 |
| C3 | 0.28 | 0.28 |
| **Total (wt%)** | 100 | 100 |
| Total siloxane content (wt%) | 5 | 5 |

**Table 6B - Properties of Table 6A Compositions**

| **Property** | **Unit** | **C6** | **Ex8** |
|---|---|---|---|
| Chemical resistance | Failure ratio | | |
| NIVEA (SPF30), 0.5% strain, 2 days | % | | |
| NIVEA (SPF30), 1% strain, 2 days | % | 40 | 20 |
| Flexural modulus | MPa | 2320 | 2330 |
| Flexural strength | MPa | 91 | 91 |
| Tensile stress @ yield | °C | 95 | 94 |
| Tensile stress @ break | MPa | 2408 | 2426 |
| Tensile elongation @ yield | MPa | 60 | 61 |
| Tensile elongation @ break | MPa | 51 | 55 |
| Tensile elongation @ yield | % | 4.3 | 4.4 |
| Tensile elongation @ break | % | 90 | 96 |
| NII, 23 °C | J/m | 907 | 782 |
| | Ductility (%) | 100 | 100 |

(continued)

| Property | Unit | C6 | Ex8 |
|---|---|---|---|
| NII, -10 °C | J/m | 789 | 634 |
| | Ductility (%) | 100 | 100 |
| Color, 2.5 mm, Ref | | | |
| L* | | 31.1 | 27.5 |
| a* | | 0.7 | 0.5 |
| b* | | -3.4 | -1.9 |
| Transmittance by Haze-gard ASTM D1003 | | | |
| T% @ 1 mm | | | |
| Haze % @ 1 mm | | | |

From these results it was observed that composition Ex8 including PC-Si-2 having a 40 wt% siloxane content had good color matching properties (L* less than 28) and chemical resistance, while comparative composition C6 including PC-Si-1 having a 20 wt% siloxane content could not achieve this deep black color.

The color (high transmittance) properties and improvements in the example compositions make them much more suitable for laser welding applications than the comparative and conventional compositions. The compositions can be used in laser welding applications using a lower energy laser, increasing laser welding efficiency. Additionally, use of a PC-Si copolymer having a higher (e.g., 40 wt%) siloxane content allows for formation of compositions having bright white colors with a higher L* value than comparative and conventional compositions.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

a. from about 10 wt% to about 85 wt% of a polycarbonate component;
b. from about 1 wt% to about 50 wt% of a polyester component; and
c. from about 5 wt% to about 40 wt% of a polycarbonate-siloxane copolymer having a siloxane content of from 25 wt% to 60 wt%,

wherein

the polycarbonate component in a. is different from the polycarbonate-siloxane copolymer in c.,
the composition comprises less than 1.0 wt% of a styrene-acrylonitrile encapsulated polytetrafluoroethylene (TSAN), and
the combined weight percent value of all components does not exceed 100 wt%, and all weight percent values are based on the total weight of the composition.

**2.** The thermoplastic composition according to claim 1, wherein the polycarbonate component comprises a polycarbonate homopolymer.

**3.** The thermoplastic composition according to claim 1 or 2, wherein the polycarbonate component comprises a post-consumer recycled polycarbonate.

**4.** The thermoplastic composition according to any one of claims 1 to 3, wherein the polyester component is a polybutylene terephthalate.

**5.** The thermoplastic composition according to any one of claims 1 to 4, wherein the polycarbonate-siloxane copolymer has a siloxane content of from 35 wt% to 45 wt%.

**6.** The thermoplastic composition according to any one of claims 1 to 5, wherein the composition comprises from about 10 wt% to about 15 wt% of the polycarbonate-siloxane copolymer.

**7.** The thermoplastic composition according to any one of claims 1 to 6, wherein the composition further comprises from greater than 0 wt% to about 20 wt% of a flame retardant component.

**8.** The thermoplastic composition according to claim 7, wherein the flame retardant component comprises bisphenol A bis(diphenyl phosphate) (BPADP), phenoxyphosphazene (PPZ), or a combination thereof.

**9.** The thermoplastic composition according to any one of claims 1 to 8, wherein the composition further comprises at least one additional additive comprising an acid scavenger, an anti-drip agent, an antioxidant, a stabilizer, an antistatic agent, a chain extender, a colorant, a release agent, a flow promoter, a lubricant, a plasticizer, a quenching agent, a UV reflecting additive, an impact modifier, a blowing agent, a reinforcing agent, or a combination thereof.

**10.** The thermoplastic composition according to any one of claims 1 to 9,

wherein the composition has an improved transmittance as compared to a reference composition having the same total siloxane content but that includes a polycarbonate-siloxane copolymer having a siloxane content of less than 25 wt% instead of the polycarbonate-siloxane copolymer having a siloxane content of from 25 wt% to 60 wt%, and
wherein transmittance is evaluated according to a UV-vis method or according to ASTM D1003.

**11.** The thermoplastic composition according to any one of claims 1 to 10, wherein the composition comprises a deep black color **characterized by** an L* color value of less than 28 as evaluated according to a CIELab color space using a sample thickness of 2.5 millimeters (mm).

**12.** The thermoplastic composition according to any one of claims 1 to 11, wherein the composition has improved chemical resistance as compared to a reference composition having the same total siloxane content that includes a polycarbonate-siloxane copolymer having a siloxane content of less than 25 wt% as compared to the polycarbonate-siloxane copolymer having a siloxane content of from 25 wt% to 60 wt%.

**13.** The thermoplastic composition according to any one of claims 1 to 12, wherein a 3.2 mm thick sample of the composition has a notched Izod impact strength of at least 440 Joules per meter (J/m) and a ductility of 100% at a temperature of 23 °C as evaluated according to ASTM D256.

**14.** An article comprising the thermoplastic composition according to any one of claims 1 to 13.

**15.** The article according to claim 14, wherein the article is a component of a consumer electronics application.

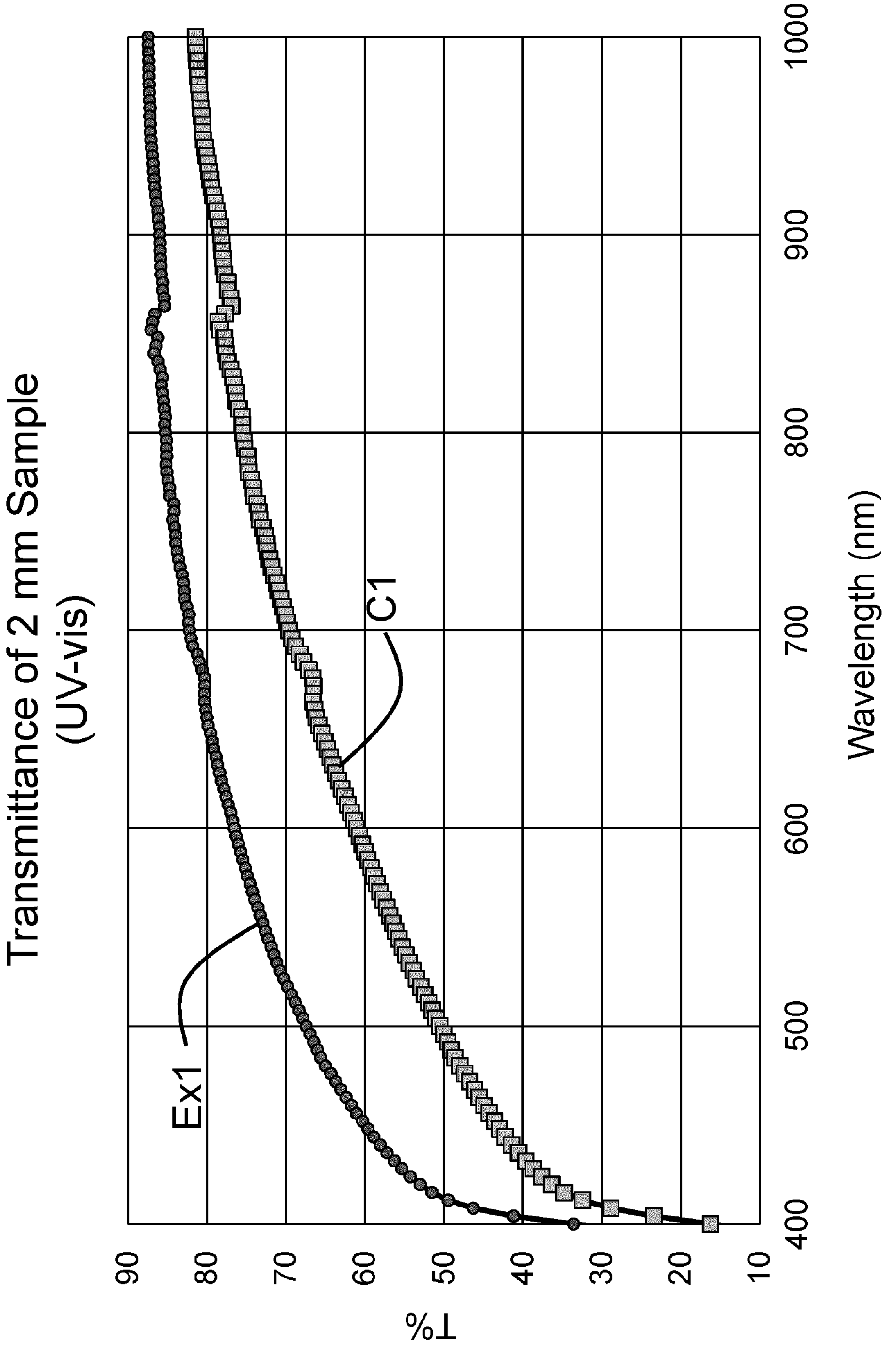
Transmittance of 2 mm Sample
(UV-vis)
T%
90
80
70
60
50
40
30
20
10
400
500
600
700
800
900
1000
Wavelength (nm)
Ex1
C1

FIG. 1

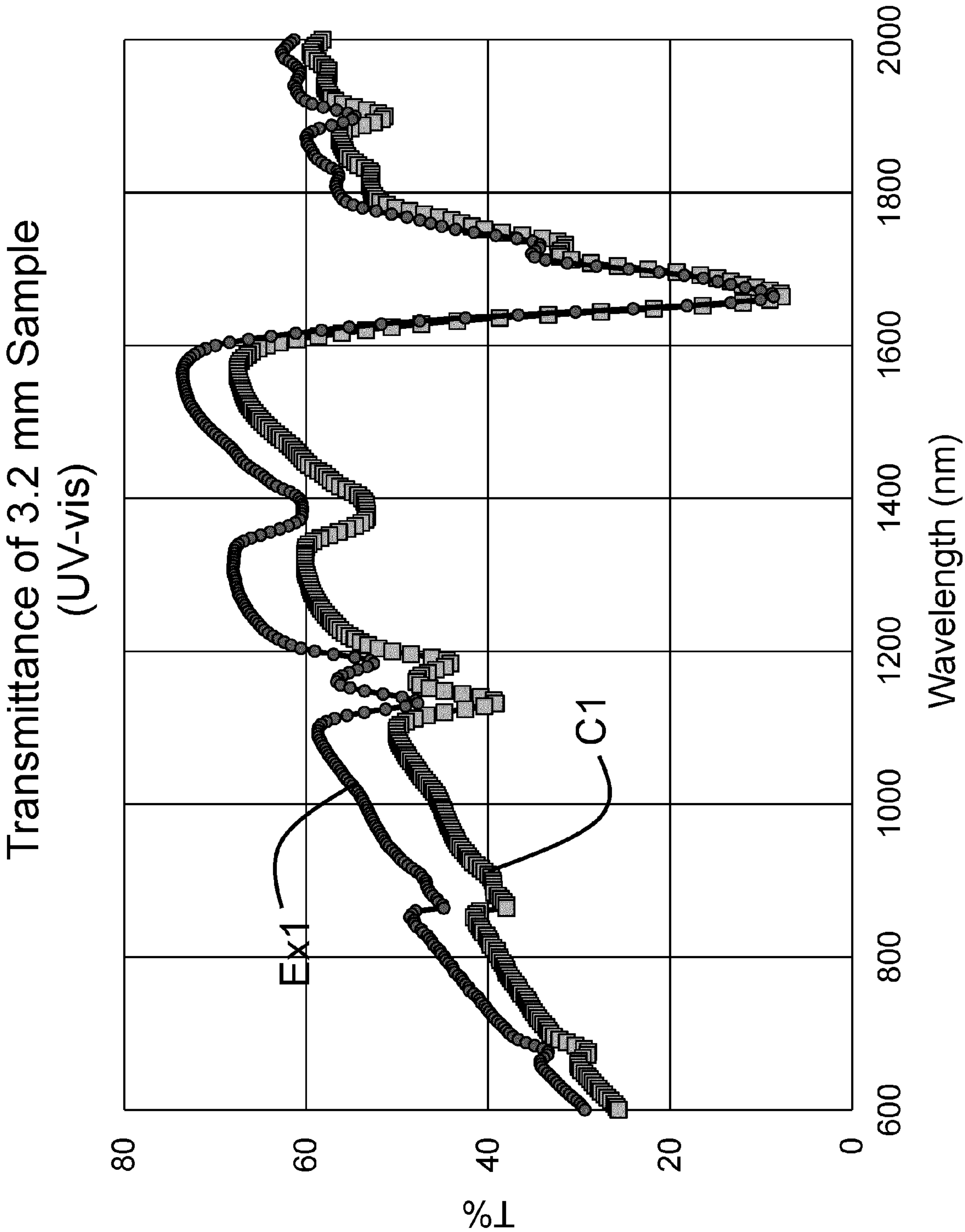
Transmittance of 3.2 mm Sample
(UV-vis)
T%
0
20
40
60
80
600
800
1000
1200
1400
1600
1800
2000
Wavelength (nm)
Ex1
C1

FIG. 2

Europäisches Patentamt
European Patent Office
Office européen des brevets

# EUROPEAN SEARCH REPORT

Application Number
EP 24 21 4408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/010833 A1 (SANGREGORIO ANNA [NL] ET AL) 11 January 2024 (2024-01-11) | 1,2,4-14 | INV. C08L27/18 C08L69/00 |
| Y | * examples 1-4; table 3 * | 3,15 | |
| X | US 2023/323110 A1 (BIHARI MALVIKA [US] ET AL) 12 October 2023 (2023-10-12) | 1,2,4-15 | |
| Y | * paragraph [0082]; examples C1,C2,C3,C4,C5,C6,C7,C9,C11; tables 1-3 * | 3 | |
| X | US 2023/111455 A1 (LEE JI HYE [KR] ET AL) 13 April 2023 (2023-04-13) | 1,2,4-14 | |
| Y | * examples 1-5; table 1 * | 3,15 | |
| Y | US 2023/295422 A1 (WANG QIN [CN] ET AL) 21 September 2023 (2023-09-21) * examples 1-9 * | 3 | |

TECHNICAL FIELDS SEARCHED (IPC)

C09J
C08L

The present search report has been drawn up for all claims

| Place of search | Date of completion of the search | Examiner |
|---|---|---|
| The Hague | 11 March 2025 | Bezard, Stéphane |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 21 4408

This annex lists the patent family members relating to the patent documents cited in the above-mentioned European search report. The members are as contained in the European Patent Office EDP file on The European Patent Office is in no way liable for these particulars which are merely given for the purpose of information.

11-03-2025

| Patent document cited in search report | Publication date | Patent family member(s) | Publication date |
|---|---|---|---|
| US 2024010833 A1 | 11-01-2024 | CN 116438261 A | 14-07-2023 |
| | | EP 4247898 A1 | 27-09-2023 |
| | | US 2024010833 A1 | 11-01-2024 |
| | | WO 2022107030 A1 | 27-05-2022 |
| US 2023323110 A1 | 12-10-2023 | CN 116096816 A | 09-05-2023 |
| | | EP 4172268 A1 | 03-05-2023 |
| | | US 2023323110 A1 | 12-10-2023 |
| | | WO 2022003594 A1 | 06-01-2022 |
| US 2023111455 A1 | 13-04-2023 | JP 7420958 B2 | 23-01-2024 |
| | | JP 2023516002 A | 17-04-2023 |
| | | US 2023111455 A1 | 13-04-2023 |
| | | WO 2022124817 A1 | 16-06-2022 |
| US 2023295422 A1 | 21-09-2023 | CN 116194534 A | 30-05-2023 |
| | | EP 3943552 A1 | 26-01-2022 |
| | | EP 4185642 A1 | 31-05-2023 |
| | | US 2023295422 A1 | 21-09-2023 |
| | | WO 2022018683 A1 | 27-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 80-05-7
- *CHEMICAL ABSTRACTS*, 6607-41-6